# EUROPEAN PATENT SPECIFICATION

(11) **EP 2 136 182 B1**
(45) Date of publication and mention of the grant of the patent: **12.10.2016**
(21) Application number: 08011208.9
(22) Date of filing: 19.06.2008
(51) Int. Cl.: G01C 21/34

(54) **Calculation of energy optimised route**
Berechnung einer energieoptimierten Route
Calcul de route optimisée pour l'énergie

(43) Date of publication of application: 23.12.2009
(73) Proprietor: Harman Becker Automotive Systems GmbH, 76307 Karlsbad (DE)
(72) Inventor: Pryakhin, Alexey, 80689 München (DE); Kunath, Peter, 80999 München (DE); Schupfner, Markus, 80797 München (DE)
(74) Representative: Bertsch, Florian Oliver

(56) References cited:
- WO-A-2007/061409
- WO-A1-98/11522
- WO-A2-2008/043049
- DE-C1- 19 605 458
- JP-A- 2006 300 780
- JP-A- 2008 101 977
- JP-A- 2008 107 155
- US-A- 5 913 917
- US-A- 6 005 494
- US-A1- 2005 216 144
- US-A1- 2008 133 120

## Description

This invention relates to a method for determining an energy optimised route for a vehicle.

### Background

In the art, navigation systems are known which calculate a route from a present vehicle position to a predetermined destination using map data and using satellite based position determination algorithms. In these navigation systems, normally the fastest route to the destination is calculated allowing to reach the destination in the shortest time possible. Additionally, it is known to calculate a shortest route with which the destination can be reached using a path of minimum distance. With the increasing costs for energy such as fuel or gas a need exists to allow the calculation of the energy optimised route to a predetermined destination for which the energy consumption, be it fuel, gas, electric energy or any other kind of energy, is minimized.

However, the energy consumption of a vehicle when travelling along a predetermined route depends on many different factors and it is difficult to precisely predict the energy consumption of the vehicle along a predetermined route.

DE19605458C1 discloses a method for determining a route for which a vehicle would use the least amount of fuel, depending on traffic information and road inclination.

US6005494A discloses a method for determining a route showing least fuel consumption. The calculation factors are updated for each road segment by, for example, measuring the actual amount of fuel used.

US2008133120A1 discloses a method for calculating the most fuel efficient route. Before the calculation starts, the navigation system updates its metrics for this calculation using feedback data from several sensors (e.g., acceleration, average speed).

WO2007061409A discloses the calculation of a fuel efficient route based on topography, traffic, and energy consumption of electrical accessories.

US5913917A discloses the calculation of fuel consumption for a given route using a reference fuel consumption value. This reference value is either incremented or decreased depending on the expected conditions of the given route.

### Summary

Accordingly, a need exists to facilitate the calculation of an energy optimised route to a predetermined destination.

This need is met by the features of the independent claims. In the dependent claims, preferred embodiments of the invention are described.

A method for determining an energy optimised route for a vehicle is provided in which a plurality of different cost factors are provided, each cost factor influencing the energy consumption of the vehicle. From the different cost factors at least one cost factor is selected and the selected cost factor or the selected cost factors are composed to a composed cost factor. The composed cost factor is then used for calculating the energy optimised route. By separating the energy consumption into different cost factors, it is possible to decompose the complex problem of the calculation of an energy optimised route into different smaller problems which can be solved separately. For some of the cost factors influencing the energy consumption, solutions are already existing which describe the influence of the energy consumption for a certain cost factor with a good approximation. By selecting some of the cost factors among the plurality of cost factors, it is possible to calculate an approximative solution. By selecting the cost factors which influence the overall energy consumption to a great extend, a composed cost factor can be determined allowing to fairly well simulate the energy consumption of a vehicle for a route.

Each cost factor is described by a mathematical model. Some of the energy related cost factors such as acceleration or the aerodynamic resistance can be described by mathematical models in a good approximation. By decomposing the complex problem of calculating the energy consumption depending on many different factors into different cost factors and by solving the separated problems using the mathematical models, it is possible to calculate a composed cost factor describing the overall energy consumption with an acceptable error.

The error made when approximating the overall energy consumption by different cost factors mainly depends on the fact which of the cost factors are used when composing the composed cost factor. It is advantageous to select for the different parts of the route, the cost factors which have the strongest influence on the overall energy consumption and to disregard the cost factors which have no or only very little influence on the overall energy consumption. Accordingly, the cost factors are classified in view of the fact whether the cost factor contributes to the composed cost factor more than a predetermined threshold. Only the cost factors contributing to the composed cost factor more than the predetermined threshold are used for the composed cost factors whereas the other cost factors contributing less than the threshold are disregarded for the composition of the composed cost factor. The composed cost factor is calculated for different parts of the route. By way of example, the composed cost factor can be calculated for each road segment or several road segments of the same type can be combined and for each part of the route the cost factors may be determined which influence the energy consumption at most. By way of example, on a highway travelling at high speed, the aerodynamic resistance and the rolling friction may have a great influence on the overall energy consumption whereas other factors may not influence the overall energy consumption on a highway to a great extend.

The cost factors can be separated into different groups. By way of example, a user cost factor may exist taking into account the driving habits of the driver of the vehicle taking into account the driver's acceleration and braking behaviour etc.. Another cost factor can be a vehicle cost factor taking into account the kind of vehicle used such as weight, the power of the engine, the kind of engine that is used, the air track coefficient etc.. A further cost factor which may be considered is a traffic cost factor taking into account traffic patterns or traffic data received by a radio signal. Such traffic data may be received using the TMC (Traffic Message Channel) data. Another cost factor considered for calculating an energy optimised route could be a map cost factor using the map data in order to calculate the energy optimised route. One factor of the map cost factor may be the road class on which a vehicle is travelling, as the energy consumption in an urban area will be different from the energy consumption on a highway. Furthermore, the inclination of the map data can be used as the fact whether a vehicle drives straight, moves up or down greatly influences the energy consumption. Another cost factor can be a vehicle environment cost factor taking into account information of the vehicle environment such as outside temperature etc..

Depending on the route, the different cost factors now have to be weighted and classified and the cost factors greatly influencing the energy consumption can be used for generating the composed cost factor. It should be understood that it is also possible to use all the cost factors for which a mathematical model exists and which are provided for the determination of the energy consumption for the determination of the composed cost factor. However, for computing efficiency reasons it might be preferable to concentrate only on some of the cost factors depending on the situation in which the energy optimised route is calculated.

The actual energy consumption of the calculated optimised route is detected and compared to the calculated energy consumption used for calculating the energy optimised route. This comparison can then be used to adapt the composition of the composed cost factors. The actual measured energy consumption may be higher or lower than predicted. This feedback can be used for the composition of the composed cost factors and for the selection of the cost factors contributing to the composed cost factors.

Furthermore, it is possible to detect the actual driving behaviour of the ) driver, e.g. the acceleration behaviour, the way the brakes are activated etc..

The composition of the composed cost factor can then be adapted to the driving behaviour of the driver. In order to provide a feedback control of the calculated energy consumption the engine temperature and maybe also the following parameters are detected: the energy consumption, the used gear, the engine speed, the accelerator, brake, or clutch activation, the vehicle velocity, the outside temperature, the electric power consumption of the vehicle, the vehicle weight, the vehicle payload, the atmospheric pressure and the tire pressure. These parameters, alone or in combination, are then used for the selection of the cost factors or as a feedback in order to compare the calculated energy consumption to the actual energy consumption.

The driving behaviour of the driver can also be used for adapting the calculation of the energy optimised route during driving. When it is noticed that the current driving behaviour differs from formerly known driving behaviours, the calculation of the energy optimised route can be adapted to the currently detected driving behaviour.

The composed cost factors determined for the different parts of the route can be stored for future use. The composed cost factors can be linked to the different parts of the route respectively and can then be used for calculating the energy optimised route.

The inclination for a part of the route is determined wherein in case the inclination of said part of the route is larger than a predetermined threshold value, the composed cost factor of that part of the route comprises at least an inclination cost factor.

The road characteristics of the route are determined wherein the cost factors are selected and composed to a composed cost factor taking into account the road characteristics such as the road class.

The need for determining an energy optimised route is furthermore met by a system for determining an energy optimised route, the system comprising the set of different cost factors each cost factor influencing the energy consumption of the vehicle. Additionally, a classification unit is provided deciding which of the different cost factors is considered for said route and composing the selected factors to a composed cost factor. A calculator calculates the energy optimised route based on the composed cost factor generated by the classification unit. Preferably, the system is configured in such a way that the energy optimised route is calculated as described in more detail above and below.

### Brief Description of the Drawings

In the following, the invention will be described more fully with reference to the accompanying drawings, in which
Fig. 1 is a schematic view of a system for determining an energy optimised route,
Fig. 2 shows a flow chart with the steps for calculating an energy optimised route, and
Fig. 3 shows an example which cost factors are considered for calculating a composed cost factor for different parts of a route.

### Details Description of Preferred Embodiments

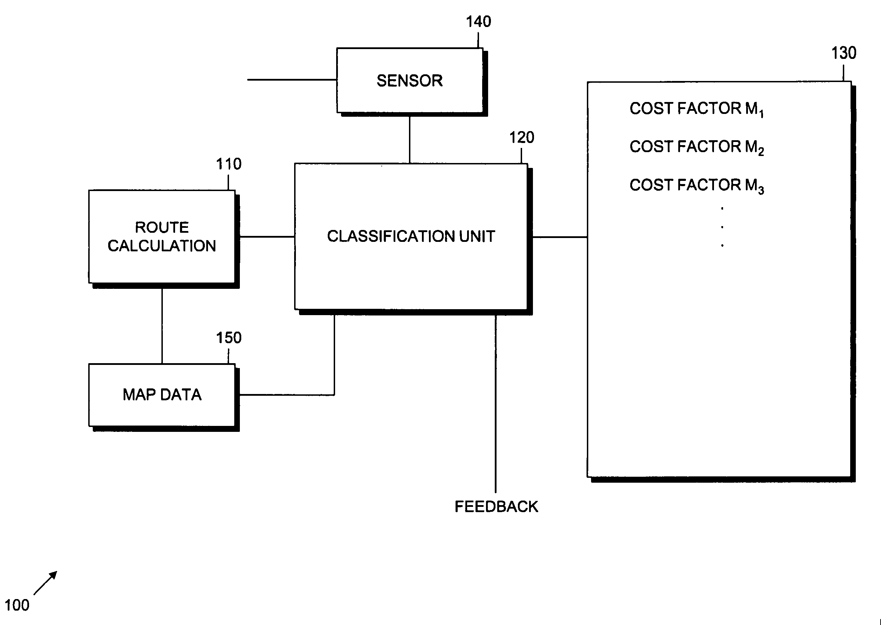

In Fig. 1 a system 100 for calculating an energy optimised route is shown. The system comprises a route calculating unit 110 which is configured in such a way that it calculates a route from a present location of a vehicle to a destination selected by the driver. Furthermore, a classification unit 120 is provided which is used for composing a composed cost factor needed for calculating the energy optimised route. The classification unit is connected to a database 130 comprising a set of different cost factors, each cost factor influencing the energy consumption of the vehicle. Each cost factor is described by a mathematical model Mᵢ, each cost factor describing one aspect of the energy consumption. The mathematical models for each cost factors Mi, M₂, M₃ ... can be determined in advance by using model data and by using known physical relationships allowing to calculate the influence of the cost factor on the energy consumption. By way of example, the cost factor M₁ may describe the energy consumption depending on the aerodynamic resistance, M₂ may describe the influence of the driving behaviour on the energy consumption, M₃ may describe the influence of the road class on the energy consumption etc.. A vehicle related cost factor in which the influence of the type of vehicle such as the engine etc. may be provided. The vehicle or engine related cost factor can be determined for each type of vehicle and stored in the vehicle. User related cost factors may be transmitted to the system from outside the system, e.g. the user related cost factor may be stored in the vehicle key the driver is using for starting the engine. This user dependent cost factor can then be transferred to the database 130 so that for each user a user dependent cost factor is provided.

Each cost factor is described by a mathematical model and each model can be solved resulting in an energy consumption for the respective cost factors. The classification unit 120 now selects the cost factors relevant for a certain part of the route and combines the selected cost factors to a combined cost factor. For determining which cost factors are best selected for approximating the energy consumption, the classification unit receives input from the vehicle or outside the vehicle the input which is represented for example in Fig. 1 by sensor 140. The sensor can receive vehicle related information such as the actual energy consumption, engine speed, vehicle speed, activation of accelerator, activation of clutch, activation of brake, vehicle weight. The information represented by the sensor can also be a user related information informing the classification unit about the driving behaviour of the user by identifying the user and by identifying the corresponding driving behaviour characteristics. Additionally, the sensor may receive information from the vehicle environment such as the outside temperature, the speed of the vehicle driving in front of the detecting vehicle etc.. Additionally, traffic related information may be received informing the classification unit about traffic congestions on the route to the predetermined destination. The classification unit has additionally access to map data 150 as the map data also influence the selection and classification of the different cost factors. The route calculation unit 110 calculates the route with an optimised energy consumption in which the classification unit for each part of the route selects the cost factors used for generating the composed cost factor. By using known optimization algorithms such as Dijkstra algorithms or A* algorithms in order to determine the route to the destination having the lowest energy consumption. The classification unit may further receive feedback in such a way that the actual energy consumption or actual driving behaviour is input to the calculation unit. The calculation unit can then compare the received energy consumption to the predicted energy consumption and can then adapt the composed energy consumption.

An additional information used by the classification unit can be the number of crossings determined from the map data, the number of red lights, the curvature of the route, the inclination for determining which is the energy optimised route. Additionally, weather information may be used by the classification unit 120 as the weather on the route may determine the energy consumption in case of adverse weather conditions.

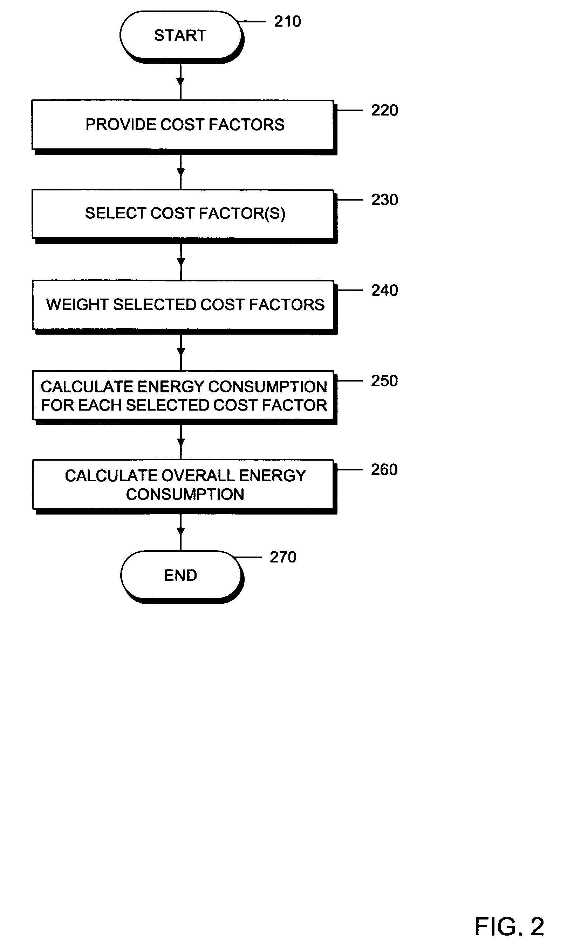

In Fig. 2, the main steps for carrying out the calculation of an energy optimised route are summarised. The method starts in step 210, and the different cost factors are provided in step 220. For each cost factor a mathematical model exists approximating the energy consumption in dependence on said cost factor. These mathematical models can be solved and describe the contribution of the respective cost factor to the overall energy consumption. In step 230, the cost factors relevant for a certain part of the route are determined depending on the relevancy of the cost factors. When it has been determined which cost factors are considered in step 230, the energy consumption for the selected cost factors can be determined by using the mathematical model underlying each cost factor. Furthermore, it is determined in step 240 how much each cost factor contributes to the overall energy consumption. When the contribution of each cost factor to the composed cost factor is known and when the energy consumption of each cost factor can be determined (step 250), it is possible in step 260 to calculate the overall energy consumption for the different parts of the route and therefore for the complete route. The energy optimised route can then be calculated using the steps 220 to 260 by determining the route to a destination having the lowest overall energy consumption. In a non-shown step, the system shown in Fig. 1 can compare the calculated energy consumption to the real energy consumption during driving. The comparison can then be used to adapt the selection and weighting of the different cost factors for the composition of the composed cost factor. Preferably, the cost factors are selected which have the greatest influence on the energy consumption for the present situation of the route calculation.

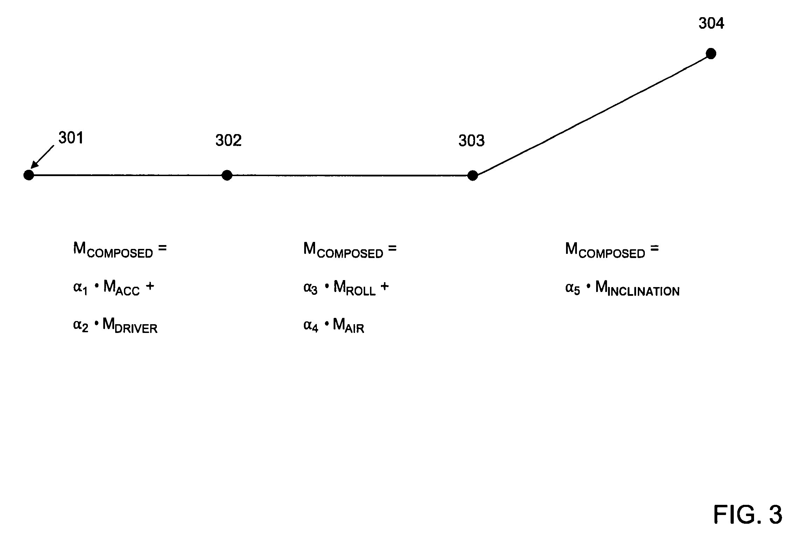

In Fig. 3 one example for the selection of the different cost factors is shown. In the embodiment shown in Fig. 3, the energy consumption is calculated when driving from location 301 to location 304 via location 302 and 303. Between location 301 and 302 the vehicle is accelerating from 0 to 100 km/h using gears 1 to 5, the inclination of the used part of the route being lower than 1 %. In this example, the mathematical model describing the energy consumption depends mainly on two aspects. The first aspect is the model describing the energy costs for the acceleration M_{acc}, the other model being the driving behaviour of the driver M_{driver}. The driver model considers how the driver normally accelerates. For the segment of the route between 301 and 302, the classification unit selects these two models and combines them in a weighted form. For the determination of the composed model or the composed cost factor, the weighting coefficients for the acceleration model α₁ and the weighting coefficient for the driver model α₂ have to be determined. By way of example, in case the system knows from former calculations that the driving behaviour has a larger influence than the acceleration model, the coefficient α₂ can be selected larger than the coefficient α₁. Between location 302 and 303, the driver is driving a constant speed of 100 km/h using one gear at a predetermined engine speed. For this part of the route, the composed model can be composed of the rolling friction describing the friction of the tires on the road. Another cost factor considered for this part of the route may be the aerodynamic resistance taking into account the geometrical form of the vehicle at a speed of 100 km/h. Both factors are weighted by the weighting coefficient α₃ and α₄, respectively, and are combined to a composed cost factor for the road segment between 302 and 303. In the example shown, the driving habits of the driver do not play a role when driving at constant velocity in one gear so that this cost factor is not considered for the calculation of the energy optimised route between location 302 and 303.

In the embodiment shown, the route between location 303 and 304 goes up a hill with an inclination of e.g. 20 %, the vehicle having a constant velocity and drives uphill using one predetermined gear. For this part of the route, the cost model describing the energy consumption in dependence on the inclination may be the dominant cost factor so that only this cost factor is considered for calculating the composed cost factor between location 303 and 304.

As can be seen from the example shown in Fig. 3, the present invention allows to decompose the complex problem of energy consumption into different single problems described by a plurality of different cost factors which are described by mathematical models. By selecting the cost factors in dependence on the driving situation for the different parts of the route, the overall energy consumption can be approximated by solving the mathematical description contributing to the composed cost factor. With such an approximation the error made during the calculation of the overall energy costs can be lowered compared to a calculation in which all factors are considered. Based on the composed cost factor for each part of the route an overall energy consumption can be calculated for a route and an energy optimised route can be calculated by determining the route having the lowest energy consumption. In the examples mentioned above, the energy consumption was used as optimised parameter. It is also possible to optimise the route in view of CO₂ emission.

## Claims

1. A method for determining an energy optimised route for a vehicle, the method comprising the steps of:
- providing a plurality of different cost factors (220), each cost factor influencing the energy consumption of the vehicle,
- selecting (230), for the different parts of the route, at least one cost factor among the different cost factors,
- composing, for the different parts of the route, the selected at least one cost factor to a composed cost factor, and
- calculating the energy optimised route based on the composed cost factor, **characterized in that** the step of selecting at least one cost factor comprises the step of classifying the cost factors according to the fact whether a cost factor contributes to the composed cost factor more than a predetermined threshold, wherein the cost factors not contributing more than the predetermined threshold are disregarded for the composition of the composed cost factor, whereas the cost factors contributing more than the predetermined threshold being used for composing the composed cost factor, wherein each cost factor is described by a mathematical model, wherein the engine temperature is detected to provide a feedback control for the calculated energy consumption used for calculating the energy optimised route.

2. The method according to claim 1, wherein at least one of the following cost factors is selected from the plurality of different cost factors: a user cost factor, a vehicle cost factor, a traffic cost factor, a map cost factor, a vehicle environment cost factor.

3. The method according to any of the preceding claims, further comprising the step of detecting the actual energy consumption for the calculated energy optimised route and comparing the actual energy consumption to the energy consumption determined for calculating the energy optimised route, wherein the composition of the composed cost factor is adapted to said comparison.

4. The method according to any of the preceding claims, further comprising the step of detecting a driving behaviour of the driver, wherein the composition of the composed cost factor is adapted to the driving behaviour of the driver.

5. The method according to any of the preceding claims, further comprising the step of detecting at least one of the following parameters:
- energy consumption, used gear, accelerator activation, break activation, clutch activation, vehicle velocity, outside temperature, electric power consumption of the vehicle, vehicle payload, atmospheric pressure, tire pressure.

6. The method according to any of the preceding claims, further comprising the step of detecting a traffic situation , wherein the energy optimised route is calculated taking into account the traffic situation.

7. The method according to any of the preceding claims, wherein a driving behaviour of a driver of the vehicle is detected when the vehicle is driving on the calculated energy optimised route, wherein the calculation of the energy optimised route is adapted to the driving behaviour.

8. The method according to any of the preceding claims further comprising the step of storing the composed cost factor determined for the different parts of the route together with the different parts of the route.

9. The method according to any of the preceding claims, further comprising the step of determining an inclination of a part of the route, wherein, when the inclination of said part is larger than a predetermined threshold value, the composed cost factor of said part of the road comprises at least an inclination cost factor.

10. The method according to any of the preceding claims, further comprising the step of detecting a road characteristic of the route, wherein the cost factors are selected and composed to a composed cost factor in accordance with the road characteristic.

## Patentansprüche

1. Verfahren zum Bestimmen einer energieoptimierten Route für ein Fahrzeug, wobei das Verfahren die folgenden Schritte umfasst:
- Bereitstellen einer Vielzahl verschiedener Kostenfaktoren (220), wobei jeder Kostenfaktor den Energieverbrauch des Fahrzeugs beeinflusst,
- Auswählen (230) mindestens eines Kostenfaktors unter den verschiedenen Kostenfaktoren für die verschiedenen Teile der Route,
- Zusammensetzen des ausgewählten mindestens einen Kostenfaktors zu einem zusammengesetzten Kostenfaktor für die verschiedenen Teile der Route, und
- Berechnen der energieoptimierten Route basierend auf dem zusammengesetzten Kostenfaktor, **dadurch gekennzeichnet, dass** der Schritt des Auswählens mindestens eines Kostenfaktors den Schritt des Klassifizierens der Kostenfaktoren gemäß der Tatsache umfasst, ob ein Kostenfaktor mehr zu dem zusammengesetzten Kostenfaktor beiträgt als ein vorher festgelegter Schwellenwert, wobei die Kostenfaktoren, die nicht mehr als der vorher festgelegte Schwellenwert beitragen, nicht für das Zusammensetzen des zusammengesetzten Kostenfaktors berücksichtigt werden, wohingegen die Kostenfaktoren, die mehr als der vorher festgelegte Schwellenwert beitragen, zum Zusammensetzen des zusammengesetzten Kostenfaktors verwendet werden, wobei jeder Kostenfaktor durch ein mathematisches Modell beschrieben wird, wobei die Motortemperatur ermittelt wird, um eine Rückkopplungssteuerung für den berechneten Energieverbrauch bereitzustellen, der für das Berechnen der energieoptimierten Route verwendet wird.

2. Verfahren nach Anspruch 1, wobei mindestens einer der folgenden Kostenfaktoren ausgewählt ist aus der Vielzahl verschiedener Kostenfaktoren: einem Benutzer-Kostenfaktor, einem Fahrzeug-Kostenfaktor, einem Verkehrs-Kostenfaktor, einem Karten-Kostenfaktor, einem Fahrzeugumgebungs-Kostenfaktor.

3. Verfahren nach einem der vorhergehenden Ansprüche, weiter umfassend den Schritt des Ermittelns des tatsächlichen Energieverbrauchs für die berechnete energieoptimierte Route und des Vergleichens des tatsächlichen Energieverbrauchs mit dem für das Berechnen der energieoptimierten Route bestimmten Energieverbrauch, wobei die Zusammensetzung des zusammengesetzten Kostenfaktors an diesen Vergleich angeglichen wird.

4. Verfahren nach einem der vorhergehenden Ansprüche, weiter umfassend den Schritt des Ermittelns eines Fahrverhaltens des Fahrers, wobei die Zusammensetzung des zusammengesetzten Kostenfaktors an das Fahrverhalten des Fahrers angeglichen wird.

5. Verfahren nach einem der vorhergehenden Ansprüche, weiter umfassend den Schritt des Ermittelns mindestens eines der folgenden Parameter:
- Energieverbrauch, verwendeter Gang, Beschleunigerbetätigung, Bremsenbetätigung, Kupplungsbetätigung, Fahrzeuggeschwindigkeit, Außentemperatur, Stromverbrauch des Fahrzeugs, Fahrzeug-Nutzlast, atmosphärischer Druck, Reifendruck.

6. Verfahren nach einem der vorhergehenden Ansprüche, weiter umfassend den Schritt des Ermittelns einer Verkehrssituation, wobei die energieoptimierte Route unter Berücksichtigung der Verkehrssituation berechnet wird.

7. Verfahren nach einem der vorhergehenden Ansprüche, wobei ein Fahrverhalten eines Fahrers des Fahrzeugs ermittelt wird, wenn das Fahrzeug auf der berechneten energieoptimierten Route fährt, wobei die Berechnung der energieoptimierten Route an das Fahrverhalten angeglichen wird.

8. Verfahren nach einem der vorhergehenden Ansprüche, weiter umfassend den Schritt des Speicherns des für die verschiedenen Teile der Route bestimmten zusammengesetzten Kostenfaktors zusammen mit den verschiedenen Teilen der Route.

9. Verfahren nach einem der vorhergehenden Ansprüche, weiter umfassend den Schritt des Bestimmens einer Steigung eines Teils der Route, wobei der zusammengesetzte Kostenfaktor des Teils der Straße mindestens einen Steigungs-Kostenfaktor umfasst, wenn die Steigung größer ist als ein vorher festgelegter Schwellenwert.

10. Verfahren nach einem der vorhergehenden Ansprüche, weiter umfassend den Schritt des Ermittelns einer Straßeneigenschaft der Route, wobei die Kostenfaktoren gemäß der Straßeneigenschaft ausgewählt und zu einem zusammengesetzten Kostenfaktor zusammengesetzt werden.

## Revendications

1. Procédé pour déterminer une route optimisée pour l'énergie pour un véhicule, le procédé comprenant les étapes de :
- fourniture d'une pluralité de différents facteurs de coût (220), chaque facteur de coût influençant la consommation d'énergie du véhicule,
- sélection (230), pour les différentes parties de la route, d'au moins un facteur de coût parmi les différents facteurs de coût,
- composition, pour les différentes parties de la route, de l'au moins un facteur de coût sélectionné pour obtenir un facteur de coût composé, et
- calcul de la route optimisée pour l'énergie sur la base du facteur de coût composé, **caractérisé en ce que** l'étape de sélection d'au moins un facteur de coût comprend l'étape de classification des facteurs de coût selon si oui ou non un facteur de coût contribue au facteur de coût composé au-delà d'un seuil prédéterminé, dans lequel les facteurs de coût ne contribuant pas au-delà du seuil prédéterminé sont écartés pour la composition du facteur de coût composé, alors que les facteurs de coût contribuant au-delà du seuil prédéterminé sont utilisés pour la composition du facteur de coût composé, dans lequel chaque facteur de coût est décrit par un modèle mathématique, dans lequel la température du moteur est détectée pour fournir une commande par rétroaction pour la consommation d'énergie calculée utilisée pour le calcul de la route optimisée pour l'énergie.

2. Procédé selon la revendication 1, dans lequel au moins l'un des facteurs de coût suivants est sélectionné parmi la pluralité de différents facteurs de coût : un facteur de coût d'utilisateur, un facteur de coût de véhicule, un facteur de coût de trafic, un facteur de coût de carte, un facteur de coût d'environnement du véhicule.

3. Procédé selon l'une quelconque des revendications précédentes, comprenant en outre l'étape de détection de la consommation d'énergie réelle pour la route optimisée pour l'énergie calculée et de comparaison de la consommation d'énergie réelle avec la consommation d'énergie déterminée pour le calcul de la route optimisée pour l'énergie, dans lequel la composition du facteur de coût composé est adaptée à ladite comparaison.

4. Procédé selon l'une quelconque des revendications précédentes, comprenant en outre l'étape de détection d'un comportement de conduite du conducteur, dans lequel la composition du facteur de coût composé est adaptée au comportement de conduite du conducteur.

5. Procédé selon l'une quelconque des revendications précédentes, comprenant en outre l'étape de détection d'au moins l'un des paramètres suivants :
- la consommation d'énergie, la vitesse utilisée, l'activation de l'accélérateur, l'activation du frein, l'activation de l'embrayage, la vitesse du véhicule, la température extérieure, la consommation d'énergie électrique du véhicule, la charge utile du véhicule, la pression atmosphérique, la pression des pneus.

6. Procédé selon l'une quelconque des revendications précédentes, comprenant en outre l'étape de détection d'une situation de trafic, dans lequel la route optimisée pour l'énergie est calculée en prenant en compte la situation du trafic.

7. Procédé selon l'une quelconque des revendications précédentes, dans lequel un comportement de conduite d'un conducteur du véhicule est détecté lorsque le véhicule est conduit sur la route optimisée pour l'énergie calculée, dans lequel le calcul de la route optimisée pour l'énergie est adapté au comportement du conducteur.

8. Procédé selon l'une quelconque des revendications précédentes comprenant en outre l'étape de stockage du facteur de coût composé déterminé pour les différentes parties de la route conjointement avec les différentes parties de la route.

9. Procédé selon l'une quelconque des revendications précédentes, comprenant en outre l'étape de détermination d'une inclinaison d'une partie de la route, dans lequel, lorsque l'inclinaison de ladite partie est supérieure à la valeur seuil prédéterminée, le facteur de coût composé de ladite partie de la route comprend au moins un facteur de coût d'inclinaison.

10. Procédé selon l'une quelconque des revendications précédentes, comprenant en outre l'étape de détection d'une caractéristique de route de la route, dans lequel les facteurs de coût sont sélectionnés et composés pour obtenir un facteur de coût composé selon la caractéristique de route.
